# EUROPEAN PATENT SPECIFICATION

(11) **EP 1 862 970 B1**
(45) Date of publication and mention of the grant of the patent: **10.10.2012**
(21) Application number: 06729353.0
(22) Date of filing: 17.03.2006
(51) Int. Cl.: G06T 7/20, G03B 5/00, G06T 7/60, H04N 5/14, H04N 5/232, H04N 7/26

(54) **IMAGE MOTION VECTOR DETECTING DEVICE**
VORRICHTUNG ZUR ERKENNUNG VON BILDBEWEGUNGSVEKTOREN
DISPOSITIF DE DETECTION DE VECTEUR DE MOUVEMENT D'IMAGE

(30) Priority: 24.03.2005 JP 2005085380
(43) Date of publication of application: 05.12.2007
(60) Divisional application: 12169757.7
(73) Proprietor: MITSUBISHI DENKI KABUSHIKI KAISHA, Chiyoda-ku, Tokyo 100-8310 (JP)
(72) Inventor: SOTODA, Shuji, chi 2-chome, Chiyoda-ku Tokyo, 1008310 (JP)
(74) Representative: Whitlock, Holly Elizabeth Ann
(86) International application number: PCT/JP2006/305363
(87) International publication number: WO 2006/101032

(56) References cited:
- JP-A- 2004 343 483
- KENYA UOMORI ET AL: "AUTOMATIC IMAGE STABILIZING SYSTEM BY FULL-DIGITAL SIGNAL PROCESSING", IEEE TRANSACTIONS ON CONSUMER ELECTRONICS, IEEE SERVICE CENTER, NEW YORK, NY, US, vol. 36, no. 3, 1 August 1990 (1990-08-01) , pages 510-519, XP000162883, ISSN: 0098-3063, DOI: 10.1109/30.103167
- JOON KI PAIK ET AL: "AN ADAPTIVE MOTION DECISION SYSTEM FOR DIGITAL IMAGE STABILIZER BASED ON EDGE PATTERN MATCHING", IEEE TRANSACTIONS ON CONSUMER ELECTRONICS, IEEE SERVICE CENTER, NEW YORK, NY, US, vol. 38, no. 3, 1 August 1992 (1992-08-01) , pages 607-615, XP000311901, ISSN: 0098-3063, DOI: 10.1109/30.156744
- KEN SAUER ET AL: "Efficient Block Motion Estimation Using Integral Projections", IEEE TRANSACTIONS ON CIRCUITS AND SYSTEMS FOR VIDEO TECHNOLOGY, IEEE SERVICE CENTER, PISCATAWAY, NJ, US, vol. 6, no. 5, 1 October 1996 (1996-10-01) , XP011014326, ISSN: 1051-8215
- SEKINE M ET AL: "Motion Vector Detecting System for Video Image Stabilizers", 19940621; 19940621 - 19940623, 21 June 1994 (1994-06-21), pages 268-269, XP010218362,

## Description

### TECHNICAL FIELD

The present invention relates to an image motion vector detection device which detects an image motion vector indicative of a motion of an object in a picture of a moving image.

### BACKGROUND ART

An image motion vector detection technique is applied to camera shake correction of a video camera (for example, refer to Non-Patent Document 1). A representative point matching method is known as a method for detecting a motion vector from images continuously captured in accordance with the image motion vector detection technique. In the representative point matching method, a representative point is set in images continuously captured at a fixed position in a previous frame of image, correlation operation is carried out for the corresponding pixels while shifting the previous frame of image in a two-dimensional direction relative to a current frame of image, and a shift having the highest correlation is output as a motion vector. However, this method has a problem that it is required that a brightness gradient equal to or higher than a constant value be present for the representative point. For example, this method cannot correctly detect a motion amount in an image having a low brightness gradient such as a document image.

For the purpose of solving the above-described problem, there is proposed a method in which feature point extraction of an image is first carried out, representative point matching operation is carried out with use of the extracted feature point as a representative point, and therefore a brightness gradient is always present for the representative point (for example, refer to Patent Document 1).

Non-Patent Document 1: "Automatic Image Stabilizing System by Video Signal Processing", ITEJ (the Institute of Television Engineers of Japan) Technical Report, Vol. 15, No. 7, pp. 43-48, January 1991.

Patent Document 1: Japanese Patent Publication No. 3534551.

Kenya Uomori et al., "Automatic Image Stabilizing System by Full-Digital Signal Processing", IEEE Transactions on Consumer Electronics, IEEE Service Center, New York, NY, US, Vol. 36, No. 3, 1 August 1990, pages 510-519, relates to an automatic image stabilizing system that uses a representative point matching calculation using 30 representative points in each of four field quadrants to obtain four motion vectors from one field and one motion vector is selected.

Joon Ki Paik et al., "An Adaptive Motion Decision System for Digital Image Stabilizer Based on Edge Pattern Matching", IEEE Transactions on Consumer Electronics, IEEE Service Center, New York, NY, US, Vol. 38, No. 3, 1 August 1992, pages 607-615, relates to image stabilisation using a local motion vector generation unit, a field motion vector generation unit and an accumulated motion vector generation unit.

### DISCLOSURE OF THE INVENTION

### PROBLEMS TO BE SOLVED BY THE INVENTION

In the conventional representative point matching method using the feature point as the representative point, however, it is required that correlation operation for the representative point be carried out while shifting pixels little by little throughout the entire searching range in the previous and current frames to find a motion vector by finding a position having the highest correlation. For this reason, the conventional method disadvantageously involves increased amount of computation.

It is therefore an object of the present invention to provide an image motion vector detection device which can solve the problem in the aforementioned conventional art and can detect an image motion vector with reduced amount of computation.

### MEANS OF SOLVING THE PROBLEMS

The invention is set out in claim 1.

### EFFECTS OF THE INVENTION

In accordance with the present invention, since a motion vector can be detected by tracing an edge as a feature point of an image, the motion vector can advantageously be detected suitably even for an image that has pixels having small brightness gradients. Further, in accordance with the present invention, since the motion vector can be detected with reduced amount of computation, the present invention can advantageously be applied to a small device such as a camera cellular phone, for example.

### BRIEF DESCRIPTION OF THE DRAWINGS

FIG. 1 is a block diagram showing a configuration of an image motion vector detection device according to the first embodiment of the present invention;
FIG. 2 is a diagram for explaining operation of a row thinning means in the image motion vector detection device according to the first embodiment;
FIGs. 3A to 3N are waveform diagrams for explaining operation of a threshold intersection decision means and a signal integration means in the image motion vector detection device according to the first embodiment;
FIG. 4 is a block diagram showing a configuration of an image motion vector detection device according to the second embodiment of the present invention;
FIG. 5 is a diagram for explaining operation of a horizontal edge extraction filtering means and a vertical projection means in the image motion vector detection device according to the second embodiment;
FIG. 6 is a block diagram showing a configuration of an image motion vector detection device according to the third embodiment of the present invention;
FIG. 7 is a diagram for explaining operation of a row thinning means, a horizontal edge extraction filtering means, and a vertical projection means in the image motion vector detection device according to the third embodiment;
FIG. 8 is a block diagram showing a configuration of an image motion vector detection device according to the fourth embodiment of the present invention;
FIG. 9 is a diagram for explaining operation of a horizontal edge extraction filtering means and a vertical block projection means in the image motion vector detection device according to the fourth embodiment;
FIG. 10 is a block diagram showing a configuration of an image motion vector detection device according to the fifth embodiment of the present invention; and
FIG. 11 is a diagram for explaining operation of a row thinning means, a horizontal edge extraction filtering means, and a vertical block projection means in the image motion vector detection device according to the fifth embodiment.

### DESCRIPTION OF REFERENCE NUMERALS

1 frame memory; 2H row thinning means; 2V column thinning means; 3H, 3V edge extraction filtering means; 4H, 4V line memory; 5H, 5V threshold intersection decision means; 6H, 6V signal integration means; 7H, 7V peak decision means; 8H horizontal motion vector decision means; 8V vertical motion vector decision means; 11 current frame image; 12 k-th row data in current frame image; 13 k-th row data in previous frame image; 14H horizontal edge extraction filtering means; 14V vertical edge extraction filtering means; 15H vertical projection means; 15V horizontal projection means; 18 image data in frame memory; 19 output by horizontal edge extraction; 20 vertical projection operation result; 21 edge extraction filtering result of row thinning data; 22 vertical projection output result; 23H vertical block projection means; 23V horizontal block projection means; 25 combination of several rows of image data subjected to horizontal edge extraction; 26 vertical projection output result; 27 vertical projection output result.

### BEST MODE FOR CARRYING OUT THE INVENTION

### First Embodiment

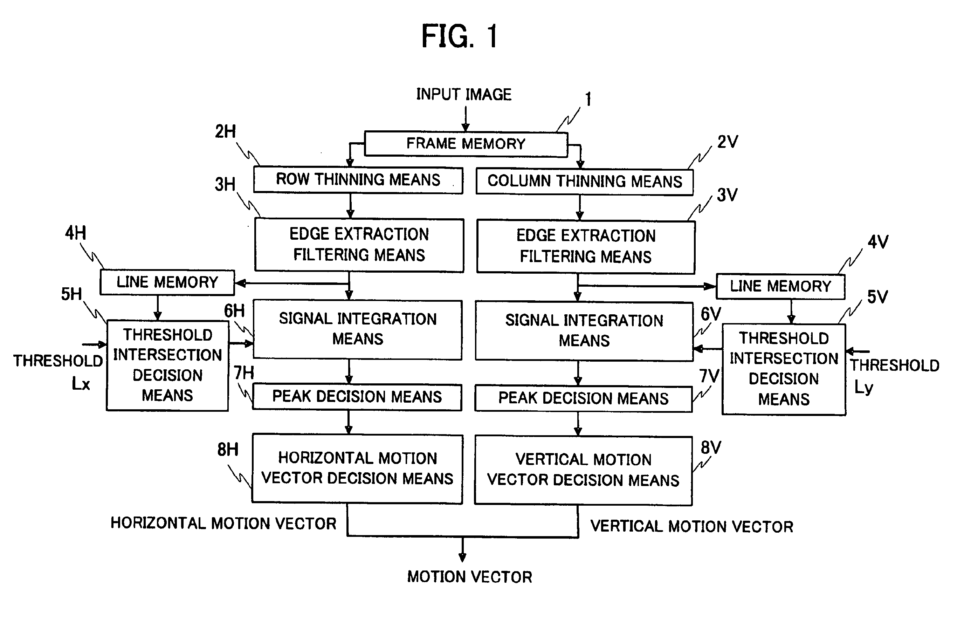

FIG. 1 is a block diagram showing a configuration of an image motion vector detection device according to the first embodiment of the present invention. The image motion vector detection device of the present invention can be used for the camera shake correction of a video camera or the like. In such video camera, the camera shake correction can be achieved by detecting a direction and a quantity in the motion of the video camera based on a detected motion vector and moving a use area on an image sensor in a direction in accordance with the detected direction and quantity so as to cancel the motion of the video camera.

As shown in FIG. 1, the image motion vector detection device according to the first embodiment includes a frame memory 1 which stores an input image corresponding to one frame, a row thinning means 2H which extracts a plurality of rows of image data from the image stored in the frame memory 1, an edge extraction filtering means 3H which filters an output of the row thinning means 2H for edge extraction, a line memory 4H which stores an output of the edge extraction filtering means 3H corresponding to the one frame, and a threshold intersection decision means 5H which determines whether or not the output of the edge extraction filtering means 3H as thinned data of the N-th row (N being a positive integer) in the previous frame stored in the line memory 4H crosses an input threshold Lₓ. The image motion vector detection device also includes a signal integration means 6H which integrates the filtered data of the N-th row as the output of the edge extraction filtering means 3H in accordance with an output of the threshold intersection decision means 5H, a peak decision means 7H which finds a position where an output of the signal integration means 6H becomes maximum, and a horizontal motion vector decision means 8H which finds a horizontal motion vector of the entire picture from an output of the peak decision means 7H corresponding to a plurality of rows.

Further, the image motion vector detection device according to the first embodiment includes a column thinning means 2V which extracts a plurality of rows of image data from the image stored in the frame memory 1, an edge extraction filtering means 3V which filters an output of the column thinning means 2V for edge extraction, a line memory 4V which stores an output of the edge extraction filtering means 3V corresponding to the one frame, and a threshold intersection decision means 5V which determines whether or not the output of the edge extraction filtering means 3V as thinned data of the M-th column (M being a positive integer) in the previous frame stored in the line memory 4V crosses an input threshold L_{y}. The image motion vector detection device also includes a signal integration means 6V which integrates the filtered data of the M-th column as the output of the edge extraction filtering means 3V in accordance with an output of the threshold intersection decision means 5V, a peak decision means 7V which finds a position where an output of the signal integration means 6V becomes maximum, and a vertical motion vector decision means 8V which finds a vertical motion vector on the entire picture from an output of the peak decision means 7V corresponding to a plurality of columns.

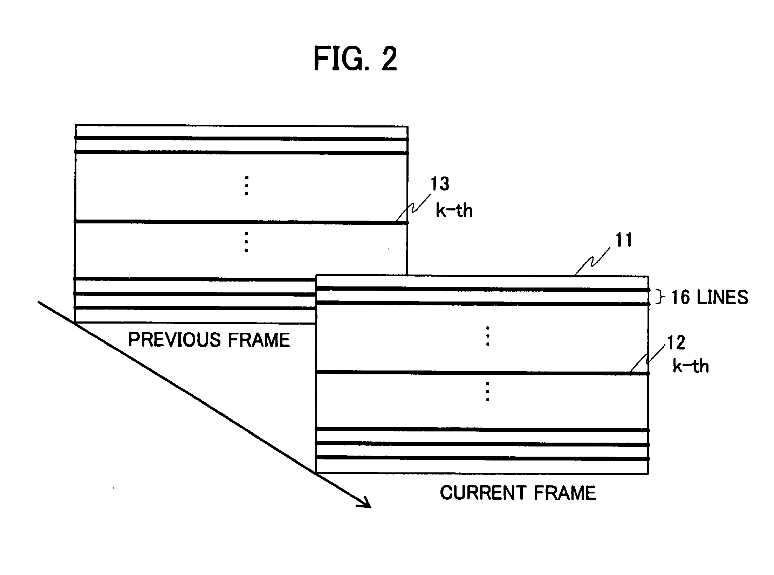

Explanation will next be made as to operation of the image motion vector detection device according to the first embodiment. In the image motion vector detection device according to the first embodiment, the frame memory 1 stores image data corresponding to one picture. The row thinning means 2H extracts one horizontal line of data of the image every sixteen lines from the image data stored in the frame memory 1, for example. FIG. 2 is a diagram for explaining operation of the row thinning means 2H. In FIG. 2, a reference numeral 11 denotes entire image data of the current frame. The row thinning means 2H extracts one row of data every sixteen lines from the entire image data 11, for example. In FIG. 2, thick lines shown in the entire image data 11 denotes the extracted data. For example, data 12 denotes row data extracted in the k-th order (k being a positive integer). All row data extracted in this way are output to the edge extraction filtering means 3H.

The edge extraction filtering means 3H filters the row data extracted by the row thinning means 2H for edge extraction. Filters used for this edge extraction includes a two-tap filter having a tap coefficient (1, -1) for simply calculating a difference between adjacent pixels or a three-tap filter having a tap coefficient (-1, 2, -1) corresponding to quadratic differential. Any other filter may be employed as the edge extraction filter, so long as it provides a large output value or a large absolute value for a part having a large brightness change and provides a small output value or a small absolute value for a part other than the large brightness part.

Further, the edge extraction filtering means 3H may convert data into two values indicative of "edge present" or "edge absent" or may convert data into three values indicative of "positive edge present", "edge absent", or "negative edge present", by passing data through the filter so as to provide a large output value or a large absolute value for a part having a large brightness change and then performing threshold processing on the output of the filter. Since the threshold processing is performed, it becomes possible to treat edges of sizes not smaller than the threshold in the same manner.

An output of the edge extraction filtering means 3H is output to the line memory 4H and also to the signal integration means 6H.

The line memory 4H stores the output of the edge extraction filtering means 3H corresponding to the one frame, and outputs data on the previous frame earlier by one frame to the threshold intersection decision means 5H.

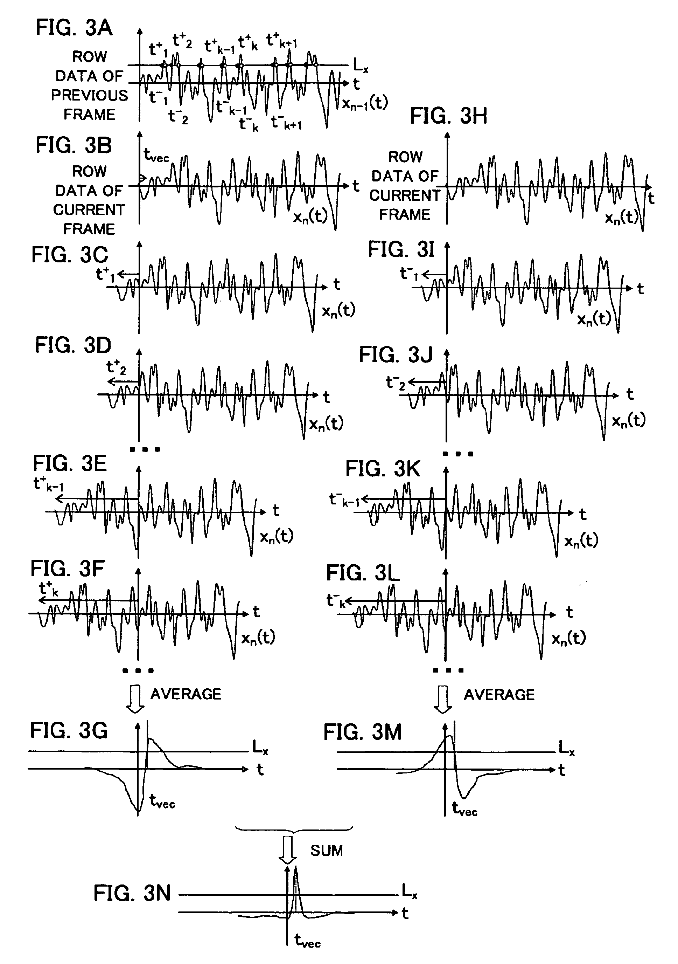

The operation of the threshold intersection decision means 5H and the signal integration means 6H will be explained by referring to FIGs. 3A to 3N. FIG. 3A shows row data obtained as a result, for example, after a line 13 which is the k-th data of the previous frame in FIG. 2 is processed by the edge extraction filtering means 3H. Such data is stored in the line memory 4H. The threshold intersection decision means 5H first finds points intersected between a signal xₙ₋₁(t) and the input threshold (preset threshold) Lₓ in a direction from the lower side to the upper side, and outputs the found points to the signal integration means 6H.

In FIG. 3A, the threshold intersection decision means 5H detects points (shown by circular black dots)
t⁺₁, t⁺₂, ..., t⁺ₖ₋₁, t⁺ₖ, t⁺ₖ₊₁, ...
of the signal intersected with the input threshold Lₓ from the lower side to the upper side.

Further, in FIG. 3A, the threshold intersection decision means 5H detects points (shown by circular white dots)
t⁻₁, t⁻₂, ..., t⁻ₖ₋₁, t⁻ₖ, t⁻ₖ₊₁, ...
of the signal intersected with the input threshold Lₓ from the upper side to the lower side.

The threshold intersection decision means 5H outputs information (position information) about
the points t⁺₁, t⁺₂, ..., t⁺_{k-1,} t⁺_{k,} t⁺ₖ₊₁, ...., and
the points t⁻₁, t⁻₂, ..., t⁻ₖ₋₁, t⁻ₖ, t⁻ₖ₊₁, ...
detected in this way to the signal integration means 6H.

The signal integration means 6H receives, together with the position information, a processed result of the row data of the image of the current frame transmitted from the edge extraction filtering means 3H. FIG. 3B shows an example of row data xₙ(t) obtained as a result in the case of the k-th data 12 of the current frame in FIG. 2 being processed by the edge extraction filtering means 3H. In this example, the row data of the current frame at the same position as the row processed by the threshold intersection decision means 5H is treated.

For easy understanding of processing contents, the first embodiment shows a case of the data xₙ(t) of the current frame being a signal obtained by shifting data Xₙ₋₁(t) of the previous frame rightward by the number of pixels t_{vec}.

The signal integration means 6H first generates a signal obtained by shifting the row data of the current frame leftward by t⁺₁, as shown in FIG. 3C.

Next, the signal integration means 6H generates a signal obtained by shifting the row data of the current frame leftward by t⁺₂, as shown in FIG. 3D.

Further, the signal integration means 6H performs substantially the same kind of processing as the above on all intersection points ..., t⁺ₖ₋₁, t⁺ₖ, t⁺ₖ₊₁, ..., as shown in FIGs. 3E and 3F.

A signal shown by FIG. 3G is obtained by calculating an average of all signals obtained in this way. The signal shown by FIG. 3G is a curved line that crosses the threshold Lₓ from the lower side to the upper side at a position t_{vec} corresponding to a shift amount of the signal of the current frame relative to the signal of the previous frame. Explanation has been made in connection with this example where the signal of the current frame is obtained by shifting the signal of the previous frame. However, in an actual image, a curved line that crosses the threshold Lₓ from the lower side to the upper side at a position shifted by t_{vec} corresponding to the motion of the image caused by camera shake can be obtained.

The above explanation has been made in connection with the case where signals corresponding to the points t⁺₁, t⁺₂, ..., t⁺ₖ₋₁, t⁺ₖ, t⁺ₖ₊₁, _{....}, for example, all the signals shown in FIGs. 3C, 3D, ..., 3E, 3F, ... are generated and then an average of them is calculated. However, another processing procedure may be employed. For example, another processing procedure may include the steps of: adding the signal of FIG. 3D when it is generated to the signal of FIG. 3C and calculating an average of the signals from a result of the adding; and performing a weighed adding of the so far calculated average and the signal of FIG. 3E when it is generated and calculating an overall average of the signals from a result of the weighed adding.

Further, depending on the processing capability and data storing capability of the device, the above method for calculating an average of the signals of FIGs. 3C, 3D, ..., 3E, 3F, .... may also be replaced with using a value obtained only by adding the signals.

Next, the signal integration means 6H shifts the row data xₙ(t) of the current frame shown FIG. 3H leftward by t⁻₁, thereby generating a signal shown in FIG. 3I.

Next, the signal integration means 6H shifts the row data xₙ(t) of the current frame shown FIG. 3H leftward by t⁻₂, thereby generating a signal shown in FIG. 3J.

Further, the signal integration means 6H performs such operation on all intersection points ..., t⁻ₖ₋₁, t⁻ₖ, t⁻ₖ₊₁, ...,as shown in FIGs. 3K and 3L. By calculating an average of all the signals obtained in this way, a signal shown in FIG. 3M is obtained. In this case, a signal shown in FIG. 3M is a curved line that crosses the threshold Lₓ from the upper side to the lower side at a position corresponding to a shift amount t_{vec} of the current frame signal to the previous frame signal. Explanation has been made in this example in connection with the case where the current frame signal is obtained by shifting the previous frame signal. For an actual image, however, such a processing procedure may be possible that the curved line crosses the threshold from the upper side to the lower side at a position shifted by t_{vec} corresponding to the motion of the image caused by camera shake.

The above explanation has been made in connection with the case where signals corresponding to the points t⁻₁, t⁻₂, ..., t⁻ₖ₋₁, t⁻ₖ, t⁻ₖ₊₁, ..., for example, all the signals shown in FIGs. 3I, 3J,..., 3K, 3L, ... are generated and then an average of them is calculated. However, another processing procedure may be employed. For example, another processing procedure may include the steps of: adding the signal of FIG. 3J when it is generated to the signal of FIG. 3I and calculating an average of the signals from a result of the adding; and performing a weighed adding of the so far calculated average and the signal of FIG. 3K when it is generated and calculating an overall average of the signals from a result of the weighed adding.

The signal integration means 6H finally calculates a sum of the signal shown in FIG. 3G and the signal shown in FIG. 3M to obtain a signal shown in FIG. 3N. The signal of FIG. 3N thus obtained is sent to the peak decision means 7H.

The peak decision means 7H finds a maximum point in the output signal of the signal integration means 6H shown in FIG. 3N. The signal shown in FIG. 3N is a curved line that takes a maximum value of Lₓ multiplied by 2 a position corresponding to a shift amount of the current frame signal to the previous frame signal. Explanation has been made in this example in connection with the case where the current frame signal is obtained by shifting the previous frame signal. For an actual image, however, a curved line that takes a maximum value at a position shifted by t_{vec} corresponding to the motion of the image caused by camera shake can be obtained. In the example of FIG. 3N, the peak decision means determines that the signal takes its maximum value at the position shifted by t_{vec}, and outputs the data t_{vec} to the horizontal motion vector decision means 8H as a vector indicative of a horizontal motion vector for the corresponding row data.

In this connection, when the peak decision means 7H determines a peak in a curved line shown in FIG. 3N, there may occur a situation that a plurality of small peaks appear and a single peak does not appear clearly. In this case, the peak decision means may perform processing operation so as to perform threshold processing on a curved line shown in FIG. 3N and to detect only a peak having a constant value or higher. As a result, erroneous detection of the motion vector can be reduced.

The threshold intersection decision means 5H, the signal integration means 6H, and the peak decision means 7H perform the operation mentioned above on all the row data selected by the row thinning means 2H and processed by the edge extraction filtering means 3H to find respective horizontal motion vectors for the respective row data; and the found horizontal motion vectors are output to the horizontal motion vector decision means 8H.

The horizontal motion vector decision means 8H receives the horizontal motion vectors of all the row data sent from the peak decision means 7H, and outputs, for example, one of the horizontal motion vectors having the highest appearance frequency as an entire picture horizontal motion vector. In this example, one of the horizontal motion vectors having the highest appearance frequency has been selected as the entire picture horizontal motion vector. However, the present invention is not limited to this method but may also employ another method that calculates an average of the horizontal motion vectors as the entire picture horizontal motion vector, for example.

Meanwhile, the column thinning means 2V extracts, for example, one column of vertical data of an image every horizontal sixteen pixels. The operation of the edge extraction filtering means 3V, the line memory 4V, the threshold intersection decision means 5V, the signal integration means 6V, the peak decision means 7V, and the vertical motion vector decision means 8V are similar to the operation of the edge extraction filtering means 3H, the line memory 4H, the threshold intersection decision means 5H, the signal integration means 6H, the peak decision means 7H, and the horizontal motion vector decision means 8H, respectively. As a result, an entire picture vertical motion vector is output from the vertical motion vector decision means 8V.

In this way, the entire picture horizontal vector is output from the horizontal motion vector decision means 8H and the entire picture vertical vector is output from the vertical motion vector decision means 8V. By combining these vectors, an entire picture motion vector is obtained.

In this way, paying attention to points at which row or column data of an image signal earlier by one frame crosses the threshold from the upper side to the lower side and also to points at which the row or column data crosses the threshold from the lower side to the upper side, the image motion vector detection device according to the first embodiment calculates an average of data obtained by shifting the current frame data by amounts corresponding to the crossed points and searches for one of the found averages having a maximum value to detect a motion vector. As a result, the device can trace a motion of a feature point such as an edge and find an image motion vector with reduced amount of computation.

### Second Embodiment

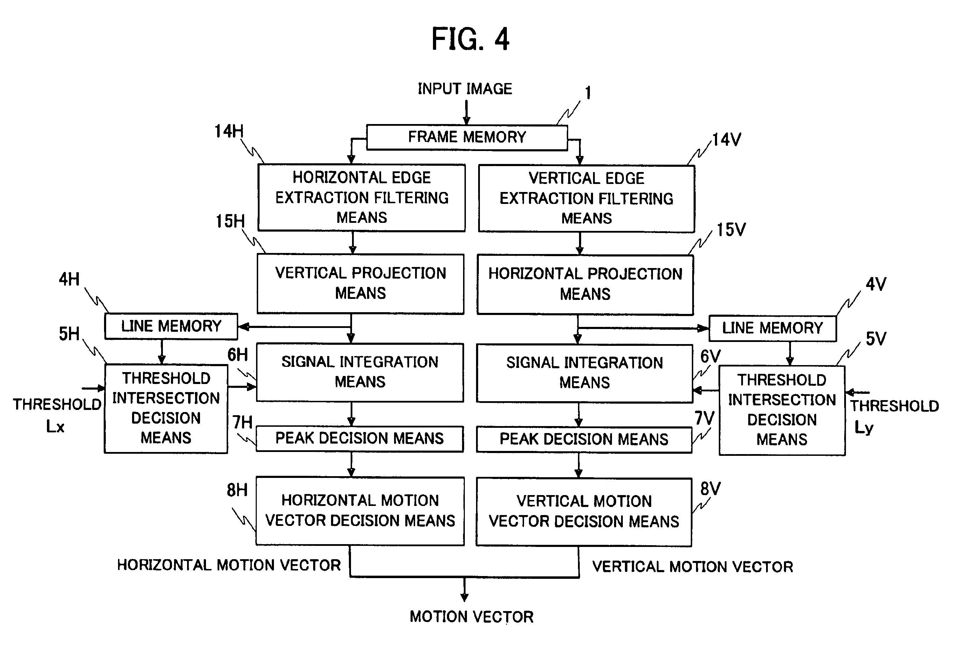

FIG. 4 is a block diagram showing a configuration of an image motion vector detection device according to the second embodiment of the present invention. In FIG. 4, constituent elements that are the same as or correspond to constituent elements in FIG. 1 (the first embodiment) are assigned the same reference numerals or symbols. The image motion vector detection device according to the second embodiment is different from that of the above-described first embodiment in that the row thinning means 2H and the edge extraction filtering means 3H in FIG. 1 are replaced with a horizontal edge extraction filtering means 14H and a vertical projection means 15H, and that the column thinning means 2V and the edge extraction filtering means 3V in FIG. 1 are replaced with a vertical edge extraction filtering means 14V and a horizontal projection means 15V.

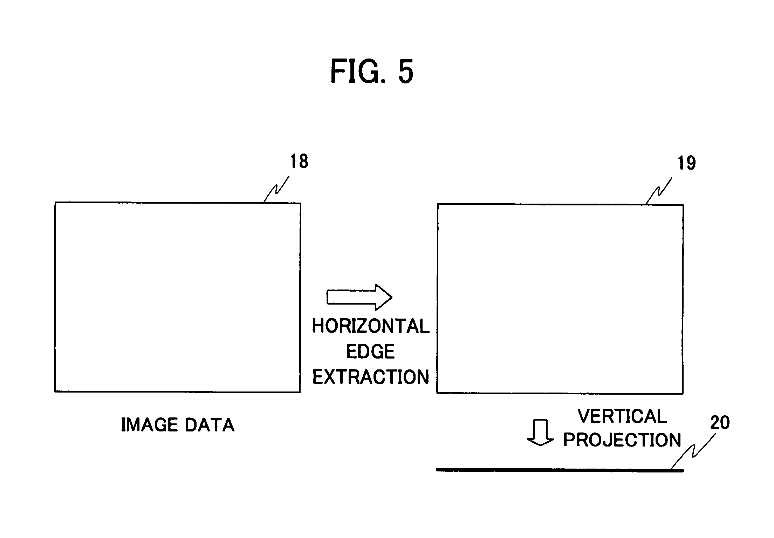

FIG. 5 is a diagram for explaining operation of the horizontal edge extraction filtering means 14H and the vertical projection means 15H in the image motion vector detection device according to the second embodiment. In FIG. 5, a reference numeral 18 denotes image data input to the horizontal edge extraction filtering means 14H. The horizontal edge extraction filtering means 14H first extracts one line of data from the image data 18 and performs substantially the same filtering operation as the edge extraction filtering means 3H on the extracted data to create one line of data having horizontal edge information. The vertical projection means 15H performs processing operation on all lines of the image data 18 to obtain data 19 corresponding to extracted horizontal edges. The vertical projection means 15H vertically projects all the data 19 corresponding to extracted horizontal edges to obtain one line of projection data 20. In this connection, the "vertically projects" is achieved, for example, by adding together vertical data.

As a result, the vertical projection data 20 contains information about horizontal edges of the image data 18, and the above projecting operation causes noise components for the lines to cancel each other. When the behavior of this data is analyzed, information on the horizontal motions in the entire image can be obtained from the one line of data.

The constituent elements indicated by from the line memory 4H to the peak decision means 7H perform processing operation similar to the first embodiment with use of one horizontal line of pixel data and extracted by the vertical projection means 15H. A peak position is found from a signal corresponding to FIG. 3N found from the vertical projection data 20. The horizontal motion vector decision means 8H outputs the output of the peak decision means 7H as it is as a horizontal motion vector.

In the first embodiment, the operation of the means indicated by from the threshold intersection decision means 5H to the peak decision means 7H is required by a number of times corresponding to the number of lines extracted by the row thinning means 2H. In the second embodiment, on the other hand, the operation of the means 5H - 7H is required only once and the entire image horizontal motion vector can be detected.

The same holds true even for detection of the vertical motion vector. That is, all columns are filtered by the vertical edge extraction filtering means 14V for vertical edge extraction and all data are horizontally projected by the horizontal projection means 15V to thereby obtain one column of data. The same operation as in the horizontal operation is then carried out even for one column of vertical data extracted by the horizontal projection means 15V to thereby obtain a vertical motion vector from the vertical motion vector decision means 8V.

Finally, the horizontal motion vector as the output of the horizontal motion vector decision means 8H and the vertical motion vector as the output of the vertical motion vector decision means 8V are combined to obtain an entire image motion vector.

In this way, paying attention to points at which vertical or horizontal projection data of an image signal earlier by one frame crosses the threshold from the upper side to the lower side and also to points at which the vertical or horizontal projection data crosses the threshold from the lower side to the upper side, the vector detection means in the second embodiment calculates an average of the projection data of the current frame shifted by an amount corresponding to the crossed points and searches for a maximum of the found averages to detect a motion vector, thereby finding a motion vector with less amount of threshold processing computation.

Further, except for the aforementioned respects, the second embodiment is substantially the same as the first embodiment.

### Third Embodiment

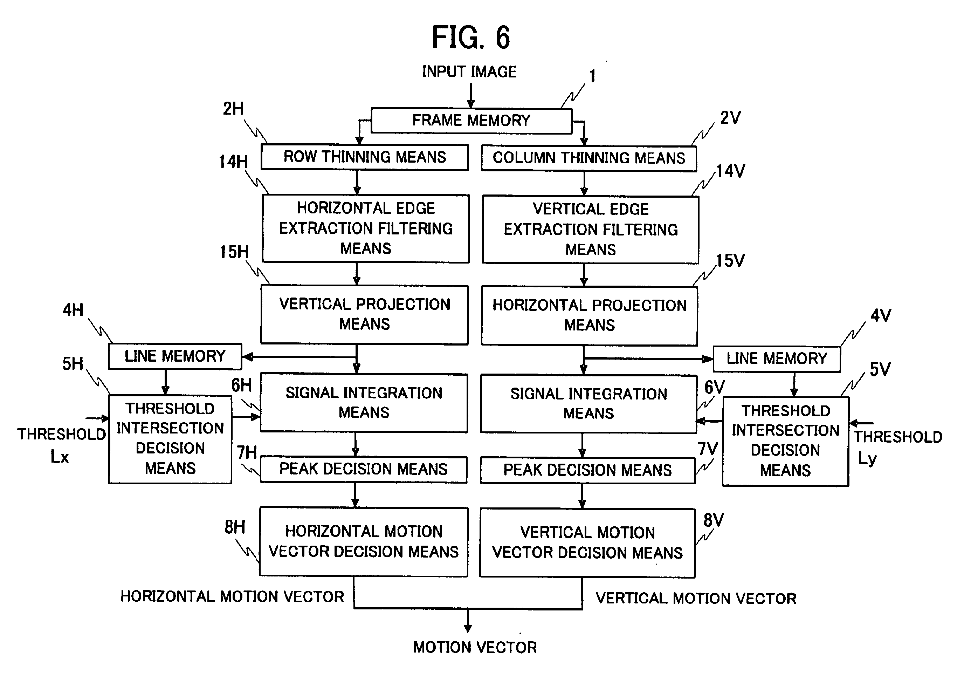

FIG. 6 is a block diagram showing a configuration of an image motion vector detection device according to the third embodiment of the present invention. In FIG. 6, constituent elements that are the same as or correspond to constituent elements in FIG. 4 (the second embodiment) are assigned the same reference numerals or symbols. The image motion vector detection device according to the third embodiment is different from that of the above-described second embodiment in that the row thinning means 2H is disposed between the frame memory 1 and the horizontal edge extraction filtering means 14H, and the column thinning means 2V is disposed between the frame memory 1 and the vertical edge extraction filtering means 14V.

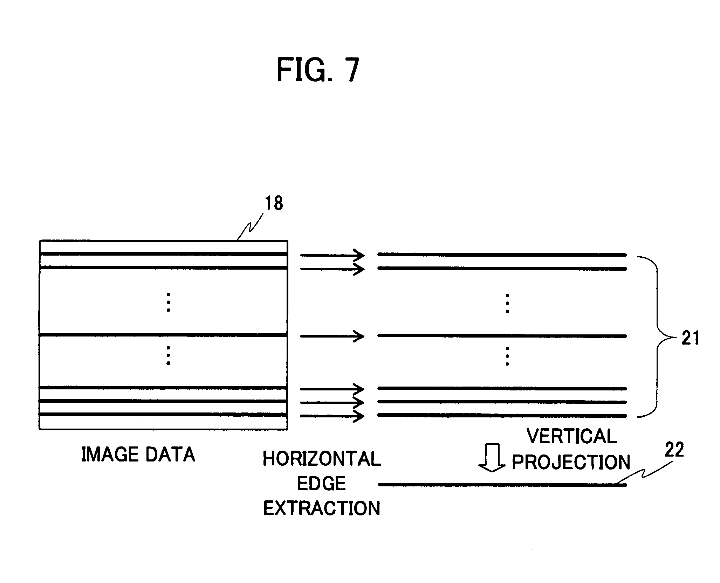

FIG. 7 is a diagram for explaining operation of the row thinning means 2H, the horizontal edge extraction filtering means 14H, and the vertical projection means 15H in the image motion vector detection device according to the third embodiment. In FIG. 7, a reference numeral 18 denotes image data stored in the frame memory 1. The row thinning means 2H extracts image data every several lines from the image data 18 stored in the frame memory 1, for example. In FIG. 7, the extracted lines of image data are shown by thick lines. The horizontal edge extraction filtering means 14H next filters the several lines of image data extracted by the row thinning means 2H for horizontal edge extraction to obtain a group of line data shown by a reference numeral 21 in FIG. 7, as an output of the horizontal edge extraction filtering means 14H. The vertical projection means 15H vertically projects a group of line data shown by 21 in FIG. 7 to obtain one line of data shown by a reference numeral 22 in FIG. 7.

In FIG. 6, the operation of the line memory 4H, the threshold intersection decision means 5H, the signal integration means 6H, and the peak decision means 7H is substantially the same as the operation in the second embodiment shown in FIG. 4.

Meanwhile, the column thinning means 2V extracts one column of vertical data for every predetermined image. The operation of the vertical edge extraction filtering means 14V, the horizontal projection means 15V, the line memory 4V, the threshold intersection decision means 5V, the signal integration means 6V, the peak decision means 7V, and the vertical motion vector decision means 8V is substantially the same as the operation of the horizontal edge extraction filtering means 14H, the edge extraction filtering means 3H, the line memory 4H, the threshold intersection decision means 5H, the signal integration means 6H, the peak decision means 7H, and the horizontal motion vector decision means 8H, respectively. As a result, the vertical motion vector decision means 8V outputs an entire image vertical motion vector.

As a result, the vertical projection data 22 contains information about all the horizontal edges extracted from the image data 18, and this projecting operation causes noise components for lines to cancel each other. When the behavior of this data is analyzed, information on the horizontal motion of the entire image can be obtained from the one line of data. In the third embodiment when compared with the second embodiment, since processing is carried out after row thinning operation, its computation amount is made less.

Further, except for the aforementioned respects, the third embodiment is substantially the same as the above-described second embodiment.

### Fourth Embodiment

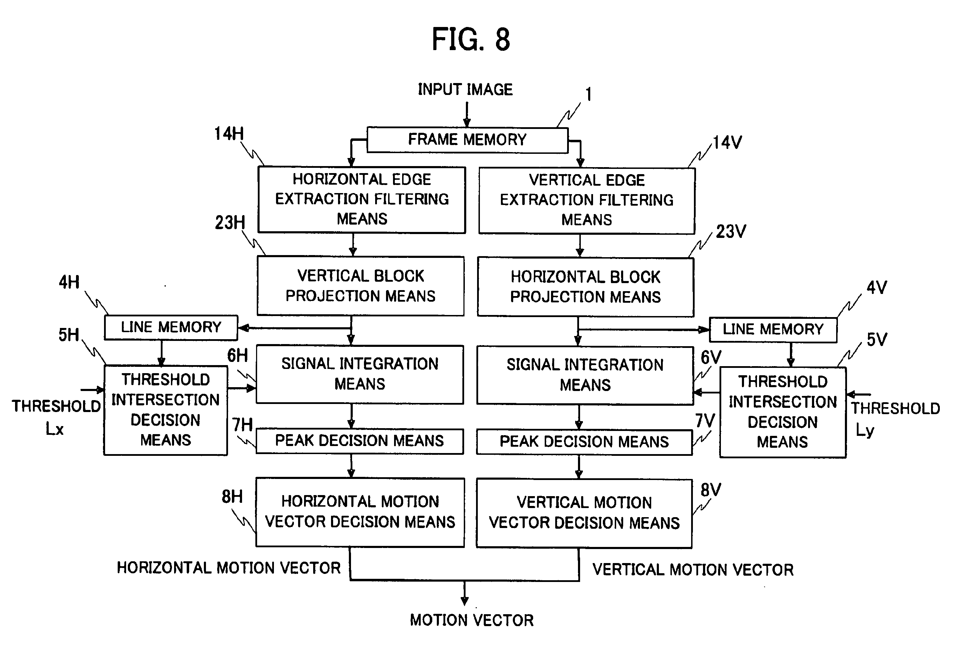

FIG. 8 is a block diagram showing a configuration of an image motion vector detection device according to the fourth embodiment of the present invention. In FIG. 8, constituent elements that are the same as or correspond to constituent elements in FIG. 1 (the first embodiment) are assigned the same reference numerals or symbols. The image motion vector detection device according to the fourth embodiment is different from that of the first embodiment in that the row thinning means 2H and the edge extraction filtering means 3H in FIG. 1 are replaced with the horizontal edge extraction filtering means 14H and a vertical block projection means 23H, and in that the column thinning means 2V and the edge extraction filtering means 3V in FIG. 1 are replaced with the vertical edge extraction filtering means 14V and a horizontal block projection means 23V.

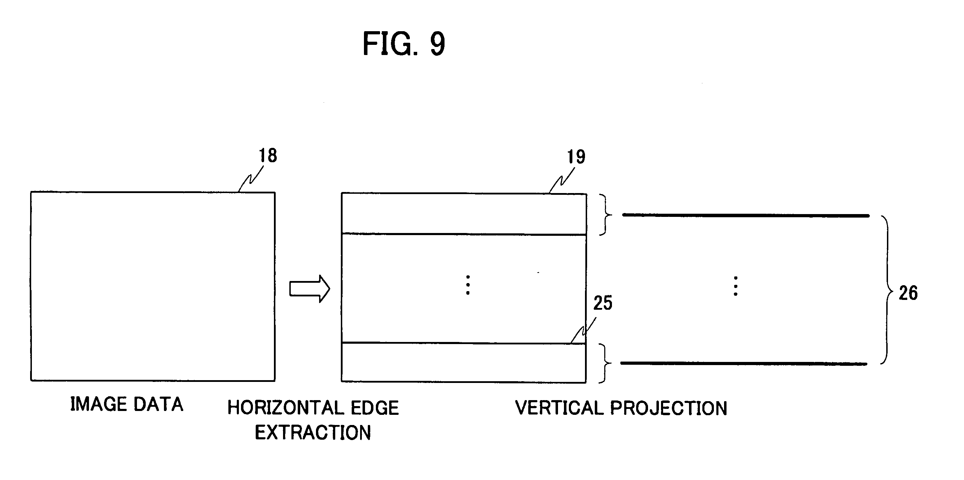

FIG. 9 is a diagram for explaining operation of the horizontal edge extraction filtering means 14H and the vertical block projection means 23H in the image motion vector detection device according to the fourth embodiment. In FIG. 9, a reference numeral 18 denotes image data stored in the frame memory 1. The horizontal edge extraction filtering means 14H filters all lines of the image data 18 stored in the frame memory 1 for horizontal edge extraction to obtain the data 19. The vertical block projection means 23H first divides the data 19 of FIG. 9 as the output of the horizontal edge extraction filtering means 14H into a plurality of vertical blocks. For example, a reference numeral 25 denotes one of the divided blocks. In the block dividing method, for example, each of the divided blocks may have a fixed number of lines or may have a different number of lines. The vertical block projection means 23H next acquires vertical projection data for all the divided blocks. In FIG. 9, the vertical projection data of the respective blocks eventually obtained are denoted by a reference numeral 26.

In FIG. 8, the operation of the line memory 4H, the threshold intersection decision means 5H, the signal integration means 6H, and the peak decision means 7H with respect to the data group assigned the reference numeral 26 in FIG. 9 is substantially the same as the operation in the first embodiment.

The operation of the vertical edge extraction filtering means 14V, the horizontal block projection means 23V, the line memory 4V, the threshold intersection decision means 5V, the signal integration means 6V, peak decision means 7V, and the vertical motion vector decision means 8V is substantially the same as the operation of the horizontal edge extraction filtering means 14H, the vertical block projection means 23H, the line memory 4H, the threshold intersection decision means 5H, the signal integration means 6H, peak decision means 7H, and the horizontal motion vector decision means 8H, respectively. As a result, an entire image vertical motion vector is output from the vertical motion vector decision means 8V.

As a result, the vertical projection data 26 contains information about all horizontal edges of the image data 18, and this projecting operation causes noise components for lines to cancel each other. A motion vector is found for each block, and an entire motion vector for the entire picture is eventually found from the found motion vectors, so that, when finding a motion not in the entire image but in part of the entire image, the device can determine the absence of the motion in the image.

Further, except for the aforementioned respects, the fourth embodiment is substantially the same as the above-described first embodiment.

### Fifth Embodiment

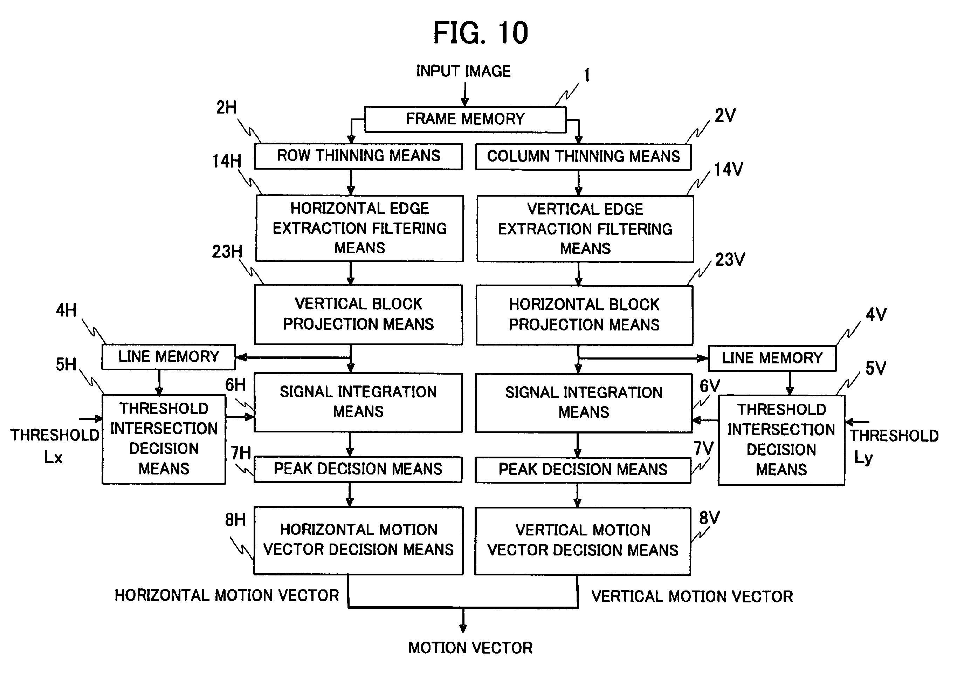

FIG. 10 is a block diagram showing a configuration of an image motion vector detection device according to the fifth embodiment of the present invention. In FIG. 10, constituent elements that are the same as or correspond to constituent elements in FIG. 8 (the fourth embodiment) are assigned the same reference numerals or symbols. The image motion vector detection device according to the fifth embodiment is different from that of the above-described fourth embodiment in that the row thinning means 2H is provided between the frame memory 1 and the horizontal edge extraction filtering means 14H and the column thinning means 2V is provided between the frame memory 1 and the vertical edge extraction filtering means 14V.

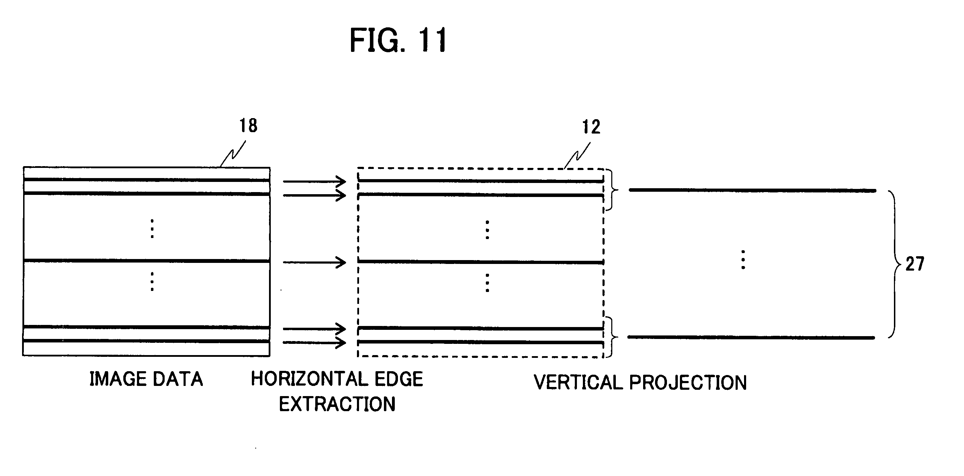

FIG. 11 is a diagram for explaining operation of the row thinning means 2H, the horizontal edge extraction filtering means 14H, and the vertical block projection means 23H in the image motion vector detection device according to the fifth embodiment. In FIG. 11, image data stored in the frame memory 1 is denoted by a reference numeral 18. The data shown by thick lines in the image data 18 are extracted by the row thinning means 2H from the image data 18, and the extracted data is output from the row thinning means. The horizontal edge extraction filtering means 14H filters the output of the row thinning means 2H for horizontal edge extraction to thereby obtain a group of row data shown by broken lines by a reference numeral 21 in FIG. 11. The vertical block projection means 23H divides the output of the horizontal edge extraction filtering means 14H shown by the reference numeral 21 in FIG. 11 into a plurality of blocks. In a block dividing method, for example, each divided block may have a fixed number of lines or may have a different number of lines. The vertical block projection means 23H next acquires vertical projection data for all the divided blocks. In FIG. 11, the vertical projection data of the respective blocks eventually obtained are denoted by a reference numeral 27.

In FIG. 10, the operation of the line memory 4H, the threshold intersection decision means 5H, the signal integration means 6H, the peak decision means 7H, and the horizontal motion vector decision means 8H is substantially the same as the operation in the fourth embodiment with respect to a data group 27 shown in FIG. 11.

Meanwhile, the column thinning means 2V extracts one column of vertical data for each predetermined image. The processing operation of the vertical edge extraction filtering means 14V, the horizontal block projection means 23V, the line memory 4V, the threshold intersection decision means 5V, the signal integration means 6V, the peak decision means 7V, and the vertical motion vector decision means 8V is substantially the same as the operation of the horizontal edge extraction filtering means 14H, the vertical block projection means 23H, the line memory 4H, the threshold intersection decision means 5H, the signal integration means 6H, peak decision means 7H, and the horizontal motion vector decision means 8H, respectively. As a result, an entire image vertical motion vector is output from the vertical motion vector decision means 8V.

As a result, the vertical projection data 27 contains information about all horizontal edges extracted from the image data 18, and this projecting operation causes noise components for lines to cancel each other. Further, a motion vector is found for each block and an entire image motion vector is eventually found from the found motion blocks, so that, when finding a motion not in the entire image but in part of the image, the device can determine the absence of the motion in the image. The fifth embodiment, when compared with the fourth embodiment, further can reduce its computation amount by finding the projection data from previously thinned image data.

Further, except for the aforementioned respects, the fifth embodiment is substantially the same as the above-described fourth embodiment.

## Claims

1. An image motion vector detection device comprising:
a horizontal edge extraction filtering means which filters horizontal row data of an image for edge extraction;
a vertical projection means which calculates a projection of the filtered row data output from the horizontal edge extraction filtering means in a vertical direction of the image;
a first decision/integration means which repeatedly shifts data of a current frame that is output from the vertical projection means by a number of pixels based on the data of the previous frame output from the vertical projection means and a preset first threshold , and integrales the shifted data;
a horizontal motion vector decision means which determines a horizontal motion vector in accordance with an output of the first decision/integration means;
a vertical edge extraction filtering means which filters column data of the image for edge extraction;
a horizontal projection means which calculates a projection of the filtered column data output from the vertical edge extraction filtering means in a horizontal direction of the image;
a second decision/integration means which repeatedly shifts data of the current frame that is output from the horizontal projection means by a number of pixels based on the data of the previous frame output from the horizontal projection means and a preset second threshold, and integrates the shifted data; and
a vertical motion vector decision means which determines a vertical motion vector in accordance with an output of the second decision/integration means
wherein by combining the horizontal and vertical motion vectors, an entire picture motion vector is obtained.

2. The image motion vector detection device according to claim 1,further comprising:
a row thinning means which extracts a predetermined number of row data from the one frame of image; and
a column thinning means which extracts a predetermined number of column data from the one frame of image;
wherein the filtering of the horizontal edge extraction filtering means is data processing of the row data extracted by the row thinning means, and the filtering of the vertical edge extraction filtering means is data processing of the column data extracted by the column thinning means.

3. The image motion vector detection device according to claim 1 or claim 2,
wherein the first decision/integration means includes:
a first threshold intersection decision means which determines an intersection between the data output from the vertical projection means and the first threshold;
a first signal integration means which shifts the data of the current frame that is output from the vertical projection means by the number of pixels based on the position where the data output from the vertical projection means crosses the first threshold, and integrates the shifted data; and
a first peak decision means which determines a peak in an output of the first signal integration means; the determination of the horizontal motion vector by the horizontal motion vector decision means being carried out in accordance with an output of the first peak decision means;
wherein the second decision/integration means includes:
a second threshold intersection decision means which determines an intersection between the data output from the horizontal projection means and the second threshold;
a second signal integration means which shifts the data of the current frame that is output from the horizontal projection means by the number of pixels based on the position where the data output from the horizontal projection means crosses the second threshold, and integrates the shifted data; and
a second peak decision means which determines a peak in an output of the second signal integration means;
the determination of the vertical motion vector by the vertical motion vector decision means being carried out in accordance with an output of the second peak decision means.

4. The image motion vector detection device according to claim 1, wherein:
the vertical projection means is vertical block projection means which vertically divides one frame of image into a plurality of blocks and calculates a projection of the filtered row data output from the horizontal edge extraction filtering means in a vertical direction of the image for each of the blocks;
the first decision/integration means shifts the data of the current frame that is output from the vertical block projection means by the number of pixels based on the data of the previous frame output from the vertical block projection means and a preset first threshold, and integrates the shifted data;
the vertical edge extraction filtering means filters column data in a vertical direction of the image for edge extraction;
the horizontal block projection means is horizontal block projection means which horizontally divides the one frame of image into a plurality of blocks and calculates a projection of filtered column data output from the vertical edge extraction filtering means in a horizontal direction of the image for each of the blocks; and
the second decision/integration means shifts data of the current frame that is output from the horizontal block projection means by the number of pixels based on the data of the previous frame output from the horizontal block projection means and a preset second threshold, and integrates the shifted data.

5. The image motion vector detection device according to claim 4, further comprising:
a row thinning means which extracts a predetermined number of row data from the one frame of image; and
a column thinning means which extracts a predetermined number of column data from the one frame of image;
wherein the filtering of the horizontal edge extraction filtering means is data processing of the row data extracted by the row thinning means, and the filtering of the vertical edge extraction filtering means is data processing of the column data extracted by the column thinning means.

6. The image motion vector detection device according to claim 4 or claim 5,
wherein the first decision/integration means includes:
a first threshold intersection decision means which determines an intersection between the data output from the vertical block projection means and the first threshold;
a first signal integration means which shifts the data of the current frame that is output from the vertical block projection means by the number of pixels based on the position where the data output from the vertical block projection means crosses the first threshold, and integrates the shifted data; and
a first peak decision means which determines a peak in an output of the first signal integration means;
the determination of the horizontal motion vector by the horizontal motion vector decision means being carried out in accordance with an output of the first peak decision means;
wherein the second decision/integration means includes:
a second threshold intersection decision means which determines an intersection between the data output from the horizontal block projection means and the second threshold;
a second signal integration means which shifts the data of the current frame that is output from the horizontal block projection means by the number of pixels based on the position where the data output from the horizontal block projection means crosses the second threshold, and integrates the shifted data; and
a second peak decision means which determines a peak in an output of the second signal integration means;
the determination of the vertical motion vector by the vertical motion vector decision means being carried out in accordance with an output of the second peak decision means.

7. The image motion vector detection device according to any of claims 1, 2, 4 or 5 wherein the edge extraction by the horizontal edge extraction filtering means is carried out by calculating a difference between a pixel and an adjacent pixel in the row direction, and the edge extraction by the vertical edge extraction filtering means is carried out by calculating a difference between a pixel and an adjacent pixel in the column direction.

8. The image motion vector detection device according to any of claims 1, 2, 4 or 5, wherein the edge extraction by the horizontal edge extraction filtering means is carried out by calculating differences between a pixel and adjacent pixels on both sides in the row direction, and the edge extraction by the vertical edge extraction filtering means is carried out by calculating differences between a pixel and adjacent pixels on both sides in the column direction.

## Patentansprüche

1. Vorrichtung zur Erkennung von Bildbewegungsvektoren umfassend:
ein horizontales Randextraktionsfiltermittel, welches horizontale Zeilendaten eines Bildes zur Randextraktion filtert;
ein vertikales Projektionsmittel, welches eine Projektion der gefilterten Zeilendatenausgabe aus dem horizontalen Randextraktionsfiltermittel in eine vertikale Richtung des Bildes berechnet;
ein erstes Entscheidungs-/Integrationsmittel, welches Daten eines aktuellen Frames, welcher aus dem vertikalen Projektionsmittel ausgegeben wird, um eine Anzahl Pixel auf der Grundlage der Daten der vorhergehenden Frame-Ausgabe aus dem vertikalen Projektionsmittel und einem voreingestellten ersten Schwellenwert wiederholt verschiebt und die verschobenen Daten integriert;
ein horizontales Bewegungsvektorentsaheidungsmittel, welches einen horizontalen Bewegungsvektor gemäß einer Ausgabe des ersten Entscheidungs-/Integrationsmittels bestimmt;
ein vertikales Randextraktionsfiltermittel, welches Spaltendaten des Bildes zur Randextraktion filtert;
ein horizontales Projektionsmittel, welches eine Projektion der gefilterten Spaltendatenausgabe aus dem vertikalen Randextraktionsliltermittel in eine horizontale Richtung des Bildes berechnet;
ein zweites Entscheidungs-/Integrationsmittel, welches Daten des aktuellen Frames, welcher aus dem horizontalen Projektionsmittel ausgegeben wird, um eine Anzahl Pixel auf der Grundlage der Daten der vorhergehenden Frame-Ausgabe aus dem horizontalen Projektionsmittel und einem voreingestellten zweiten Schwellenwert wiederholt verschiebt und die verschobenen Daten integriert; und
ein vertikales Bewegungsvektorentscheidungsmittel, welches einen vertikalen Bewegungsvektor gemäß einer Ausgabe des zweiten Entscheidungs-/Integrationsmittels bestimmt;
wobei durch Vereinen der horizontalen und vertikalen Bewegungsvektoren ein gesamter Bildbewegungsvektor erhalten wird.

2. Vorrichtung zur Erkennung von Bildbewegungsvektoren nach Anspruch 1 weiterhin umfassend:
ein Zeilenausdünnungsmittel, welches eine vorbestimmte Anzahl Zeilendaten aus dem einen Frame des Bildes extrahiert; und
ein Spaltenausdünnungsmittel, welches eine vorbestimmte Anzahl Spaltendaten aus dem einen Frame des Bildes extrahiert;
wobei das Filtern des horizontalen Randextraktionsfiltermittels eine Datenverarbeitung der Zeilendaten ist, welche durch das Zeilenausdünnungsmittel extrahiert wurden, und das Filtern des vertikalen Randextraktionsfiltermittels eine Datenverarbeitung der Spaltendaten ist, welche durch das Spaltenausdünnungsmittel extrahiert wurden.

3. Vorrichtung zur Erkennung von Bildbewegungsvektoren nach Anspruch 1 oder 2,
wobei das erste Entscheidungs-/Integrationsmittel Folgendes aufweist:
ein erstes Schwellenwertschnittpunkt-Entscheidungsmittel, welches einen Schnittpunkt zwischen der Datenausgabe aus dem vertikalen Projektionsmittel und dem ersten Schwellenwert bestimmt;
ein erstes Signalintegrationsmittel, welches die Daten des aktuellen Frames, welcher aus dem vertikalen Projektionsmittel ausgegeben wird, um die Anzahl Pixel auf der Grundlage der Position, wo die Datenausgabe aus dem vertikalen Projektionsmittel den ersten Schwellenwert schneidet, verschiebt und die verschobenen Daten integriert; und
ein erstes Peak-Entscheidungsmittel, welches einen Peak in einer Ausgabe des ersten Signalintegrationsmittels bestimmt, wobei die Bestimmung des horizontalen Bewegungsvektors durch das horizontale Bewegungsvektorentscheidungsmittel gemäß einer Ausgabe des ersten Peak-Entscheidungsmittels ausgeführt wird;
wobei das zweite Entscheidungs-/Integrationsmittel Folgendes aufweist:
ein zweites Schwellenwertschnittpunkt-Entscheidungsmittel, welches einen Schnittpunkt zwischen der Datenausgabe aus dem horizontalen Projektionsmittel und dem zweiten Schwellenwert bestimmt;
ein zweites Signalintegrationsmittel, welches die Daten des aktuellen Frames, welcher aus dem horizontalen projektionsmittel ausgegeben wird, um die Anzahl Pixel auf der Grundlage der Position, wo die Datenausgabe aus dem horizontalen Projektionsmittel den zweiten Schwellenwert schneidet, verschiebt und die verschobenen Daten integriert; und
ein zweites Peak-Entscheidungsmittel, welches einen Peak in einer Ausgabe des zweiten signalintegrationsmittels bestimmt;
wobei die Bestimmung des vertikalen Bewegungsvektors durch das vertikale Bewegungsvektorentscheidungsmittel gemäß einer Ausgabe des zweiten Peak-Entscheidungsmittels ausgeführt wird.

4. Vorrichtung zur Erkennung von Bildbewegungsvektoren nach Anspruch 1, wobei:
das vertikale Projektionsmittel ein vertikales Blockprojektionsmittel ist, welches einen Frame des Bildes vertikal in mehrere Blöcke aufteilt und eine Projektion der gefilterten Zeilendatenausgabe aus dem horizontalen Randextraktionsfiltermittel in einer vertikalen Richtung des Bildes für jeden der Blöcke berechnet;
das erste Entscheidungs-/Integrationsmittel die Daten des aktuellen Frames, welcher aus dem vertikalen Blockprojektionsmittel ausgegeben wird, um die Anzahl Pixel auf der Grundlage der Daten der vorhergehenden Frame-Ausgabe aus dem vertikalen Blockprojektionsmittel und einem voreingestellten ersten Schwellenwert verschiebt und die verschobenen Daten integriert;
das vertikale Randextraktionsfiltermittel Spaltendaten in einer vertikalen Richtung des Bildes zur Randextraktion filtert;
das horizontale Blockprojektionsmittel ein horizontales Blockprojektionsmittel ist, welches den einen Frame des Bildes horizontal in mehrere Blöcke aufteilt und eine Projektion der gefilterten Spaltendatenausgabe aus dem vertikalen Randextraktionsfiltermittel in einer horizontalen Richtung des Bildes für jeden der Blöcke berechnet; und
das zweite Entscheidungs-/Integrationsmittel Daten des aktuellen Frames, welcher aus dem horizontalen Blockprojektionsmittel ausgegeben wird, um die Anzahl Pixel auf der Grundlage der Daten der vorhergehenden Frame-Ausgabe aus dem horizontalen Blockprojektionsmittel und einem voreingestellten zweiten Schwellenwert verschiebt und die verschobenen Daten integriert;

5. Vorrichtung zur Erkennung von Bildbewegungsvektoren nach Anspruch 4 weiterhin umfassend:
ein Zeilenausdünnungsmittel, welches eine vorbestimmte Anzahl Zeilendaten aus dem einen Frame des Bildes extrahiert; und
ein Spaltenausdünnungsmittel, welches eine vorbestimmte Anzahl Spaltendaten aus dem einen Frame des Bildes extrahiert;
wobei das Filtern des horizontalen Randextraktionsfiltermittels eine Datenverarbeitung der Zeilendaten ist, welche durch das Zeilenausdünnungsmittel extrahiert wurden, und das Filtern des vertikalen Randextraktionsfiltermittels eine Datenverarbeitung der Spaltendaten ist, welche durch das spaltenausdünnungsmittel extrahiert wurden.

6. Vorrichtung zur Erkennung von Bildbewegungsvektoren nach Anspruch 4 oder 5,
wobei das erste Entscheidungs-/Integrationsmittel Folgendes aufweist:
ein erstes Schwellenwertschnittpuxikt-Entscheidungsmittel, welches einen Schnittpunkt zwischen der Datenausgabe aus dem vertikalen Blockprojektionsmittel und dem ersten schwellenwert bestimmt;
ein erstes Signalintegrationsmittel, welches die Daten des aktuellen Frames, welcher aus dem vertikalen Blockprojektionsmittel ausgegeben wird, um die Anzahl Pixel auf der Grundlage der Position, wo die Datenausgabe aus dem vertikalen Blockprojektionsmittel den ersten Schwellenwert schneidet, verschiebt und die verschobenen Daten integriert; und
ein erstes Peak-Entscheidungsmittel, welches einen Peak in einer Ausgabe des ersten Signalintegrationsmittels bestimmt;
wobei die Bestimmung des horizontalen Bewegungsvektors durch das horizontale Bewegungsvektorentscheidungsmittel gemäß einer Ausgabe des ersten Peak-Entscheidungsmittels ausgeführt wird;
wobei das zweite Entscheidungs-/Integrationsmittel Folgendes aufweist:
ein zweites Schwellenwertschnittpunkt-Entscheidungsmittel, welches einen Schnittpunkt zwischen der Datenausgabe aus dem horizontalen Blockprojektionsmittel und dem zweiten Schwellenwert bestimmt;
ein zweites signalintegrationsmittel, welches die Daten des aktuellen Frames, welcher aus dem horizontalen Blockprojektionsmittel ausgegeben wird, um die Anzahl Pixel auf der Grundlage der Position, wo die Datenausgabe aus dem horizontalen Blockprojektionsmittel den zweiten Schwellenwert schneidet, verschiebt und die verschobenen Daten integriert; und
ein zweites Peak-Entscheidungsmittel, welches einen Peak in einer Ausgabe des zweiten Signalintegrationsmittels bestimmt;
wobei die Bestimmung des vertikalen Bewegungsvektors durch das vertikale Bewegungsvektorentscheidungsmittel gemäß einer Ausgabe des zweiten Peak-Entscheidungsmittels ausgeführt wird.

7. vorrichtung zur Erkennung von Bildbewegungsvektoren nach einem der Ansprüche 1, 2, 4 oder 5, wobei die Randextraktion durch das horizontale Randextraktionsfiltermittel durch Berechnen einer Differenz zwischen einem Pixel und einem benachbarten Pixel in der Zeilenrichtung ausgeführt wird und die Randextraktion durch das vertikale Randextraktionsfiltermittel durch Berechnen einer Differenz zwischen einem Pixel und einem benachbarten Pixel in der Spaltenrichtung ausgeführt wird.

8. Vorrichtung zur Erkennung von Bildbewegungsvektoren nach einem der Ansprüche 1, 2, 4 oder 5, wobei die Randextraktion durch das horizontale Randextraktionsfiltermittel durch Berechnen von Differenzen zwischen einem Pixel und benachbarten Pixeln auf beiden Seiten in der Zeilenrichtung ausgeführt wird und die Randextraktion durch das vertikale Randextraktionsfiltermittel durch Berechnen von Differenzen zwischen einem Pixel und benachbarten Pixeln auf beiden Seiten in der Spaltenrichtung ausgeführt wird.

## Revendications

1. Dispositif de détection de vecteur de mouvement d'image comprenant :
des moyens de filtrage d'extraction de bord horizontal qui filtrent des données de ligne horizontale d'une image pour une extraction de bord ;
des moyens de projection verticale qui calculent une projection des données de ligne filtrées délivrées en sortie par les moyens de filtrage d'extraction de bord horizontal dans une direction verticale de l'image ;
des premiers moyens de décision / d'intégration qui décalent de manière répétée les données d'une trame courante qui est délivrée en sortie par les moyens de projection verticale, d'un nombre de pixels basé sur les données de la trame précédente délivrées en sortie par les moyens de projection verticale et d'un premier seuil préréglé, et intègrent les données décalées ;
des moyens de détermination d'un vecteur de mouvement horizontal qui déterminent un vecteur de mouvement horizontal selon une sortie des premiers moyens de décision / d'intégration ;
des moyens de filtrage d'extraction de bord vertical qui filtrent des données de colonne de l'image pour une extraction de bord ;
des moyens de projection horizontale qui calculent une projection des données de colonne filtrées délivrées en sortie par les moyens de filtrage d'extraction de bord vertical dans une direction horizontale de l'image ;
des seconds moyens de décision / d'intégration qui décalent de manière répétée les données de la trame courante qui est délivrée en sortie par les moyens de projection horizontale, d'un certain nombre de pixels basé sur les données de la trame précédente délivrées en sortie par les moyens de projection horizontale et d'un second seuil préréglé, et intègrent les données décalées ; et
des moyens de détermination d'un vecteur de mouvement vertical qui déterminent un vecteur de mouvement vertical selon une sortie des seconds moyens de décision / d'intégration ;
dans lequel, en combinant les vecteurs de mouvement horizontal et vertical, on obtient un vecteur de mouvement d'image entier.

2. Dispositif de détection de vecteur de mouvement d'image selon la revendication 1, comprenant en outre :
des moyens d'amincissement de lignes qui extraient un nombre prédéterminé de données de lignes à partir de la trame de l'image ; et
des moyens d'amincissement de colonnes qui extraient un nombre prédéterminé de données de colonne à partir de la trame de l'image ;
dans lequel le filtrage des moyens de filtrage d'extraction de bord horizontal est un tracement de données des données de lignes extraites par les moyens d'amincissement de lignes, et le filtrage des moyens de filtrage d'extraction de bord vertical est un traitement de données des données de colonnes extraites par les moyens d'amincissement de colonnes.

3. Dispositif de détection de vecteur de mouvement d'image selon la revendication 1 ou la revendication 2,
dans lequel les premiers moyens de décision / d'intégration comprennent :
des moyens de détermination d'une intersection avec un premier seuil qui déterminent une intersection entre les données délivrées en sortie par les moyens de projection verticale et le premier seuil ;
des premiers moyens d'intégration de signal qui décalent les données de la trame courante qui est délivrée en sortie par les moyens de projection verticale, du nombre de pixels basé sur la position dans laquelle les données en provenance des moyens de projection verticale croisent le premier seuil, et intègrent les données décalées ; et
des premiers moyens de détermination de pie qui déterminent un pic dans une sortie des premiers moyens d'intégration de signal, la détermination du vecteur de mouvement horizontal par les moyens de détermination de vecteur de mouvement horizontal étant effectuée selon une sortie des premiers moyens de détermination de pic ;
dans lequel les seconds moyens de décision / d'intégration comprennent :
des moyens de détermination d'une intersection avec un second seuil qui déterminent une intersection entre les données délivrées en sortie par les moyens de projection horizontale et le second seuil ;
des seconds moyens d'intégration de signal qui décalent les données de la trame courante qui est délivrée en sortie par les moyens de projection horizontale, du nombre de pixels basé sur la position dans laquelle les données en provenance des moyens de projection horizontale croisent le second seuil, et intègrent les données décalées ; et
des seconds moyens de détermination de pic qui déterminent un pic dans une sortie des seconds moyens d'intégration de signal, la détermination du vecteur de mouvement vertical par les moyens de détermination de vecteur de mouvement vertical étant effectuée selon une sortie des seconds moyens de détermination de pic.

4. Dispositif de détection de vecteur de mouvement d'image selon la revendication 1, dans lequel :
les moyens de projection verticale sont des moyens de projection verticale de bloc qui divisent verticalement une trame d'image en une pluralité en blocs et qui calculent une projection des données de ligne filtrées délivrées en sortie par les moyens de filtrage d'extraction de bord horizontal dans une direction verticale de l'image pour chacun des blocs ;
les premiers moyens de décision / d'intégration décalent les données de la trame courante qui est délivrée en sortie par les moyens de projection verticale en blocs, du nombre de pixels basé sur les données de la trame précédente délivrées en sortie par les moyens de projection verticale en blocs et d'un premier seuil préréglé, et intègrent les données décalées ;
les moyens de filtrage d'extraction de bord vertical filtrent les données de colonne dans une direction verticale de l'image pour une extraction de bord ;
les moyens de projection horizontale sont des moyens de projection horizontale en bloc qui divisent horizontalement la trame d'image en une pluralité de blocs et qui calculent une projection des données de colonne filtrées délivrées en sortie par les moyens de filtrage d'extraction de bord vertical dans une direction horizontale de l'image pour chacun des blocs ; et
les seconds moyens de décision / d'intégration décalent les données de la trame courante qui est délivrée en sortie par les moyens de projection horizontale en blocs, du nombre de pixels basé sur les données de la trame précédente délivrées en sortie par les moyens de projection horizontale en blocs et d'un second seuil préréglé, et intègrent les données décalées.

5. Dispositif de détection de vecteur de mouvement d'image selon la revendication 4, comprenant en outre :
des moyens d'amincissement de lignes qui extraient un nombre prédétermine de données de ligne à partir de la trame de l'image ; et
des moyens d'amincissement de colonnes qui extraient un nombre prédéterminé de données de colonne à partir de la trame de l'image ;
dans lequel le filtrage des moyens de filtrage d'extraction de bord horizontal est un traitement de données des données de lignes extraites par les moyens d'amincissement de lignes, et le filtrage des moyens de filtrage d'extraction de bord vertical est un traitement de données des données de colonnes extraites par les moyens d'amincissement de colonnes.

6. Dispositif de détection de vecteur de mouvement d'image selon la revendication 4 ou la revendication 5,
dans lequel les premiers moyens de décision / d'intégration comprennent :
des moyens de détermination d'intersection avec un premier seuil qui déterminent une intersection entre les données délivrées en sortie par les moyens de projection verticale en blocs et le premier seuil ;
des premiers moyens d'intégration de signal qui décalent les données de la trame courante qui est délivrée en sortie par les moyens de projection verticale en blocs, du nombre de pixels basé sur la position dans laquelle les données en provenance des moyens de projection verticale en blocs croisent le premiers seuil, et intègrent les données décalées ; et
des premiers moyens de détermination de pic qui déterminent un pic dans une sortie des premiers moyens d'intégration de signal ;
la détermination du vecteur de mouvement horizontal par les moyens de détermination de vecteur de mouvement horizontal étant effectuée selon une sortie des premiers moyens de détermination de pic ;
dans lequel les seconds moyens de décision / d'intégration comprennent :
des moyens de détermination d'une intersection avec un second seuil qui déterminent une intersection entre les données délivrées en sortie par les moyens de projection horizontale en blocs et le second seuil ;
des seconds moyens d'intégration de signal qui décalent les données de la trame courante qui est délivrée en sortie par les moyens de projection horizontale en blocs, du nombre de pixels basé sur la position dans laquelle les données en provenance des moyens de projection horizontale en blocs croisent le second seuil, et intègrent les données décalées ; et
des seconds moyens de détermination de pic qui déterminent un pic dans une sortie des seconds moyens d'intégration de signal ;
la détermination du vecteur de mouvement vertical par les moyens de détermination de vecteur de mouvement vertical étant effectuée selon une sortie des seconds moyens de détermination de pic.

7. Dispositif de détection de vecteur de mouvement d'image selon l'une quelconque des revendications 1, 2, 4 ou 5, dans lequel l'extraction de bord par les moyens de filtrage d'extraction de bord horizontal est effectuée en calculant une différence entre un pixel et un pixel adjacent dans la direction de la ligne, et l'extraction de bord par les moyens de filtrage d'extraction de bord vertical est effectuée en calculant une différence entre un pixel et un pixel adjacent dans la direction de la colonne.

8. Dispositif de détection de vecteur de mouvement d'image selon l'une quelconque des revendications 1, 2, 4 ou 5, dans lequel l'extraction de bord par les moyens de filtrage d'extraction de bord horizontal est effectuée en calculant des différences entre un pixel et des pixels adjacents des deux côtés dans la direction de la ligne, et l'extraction de bord par les moyens de filtrage d'extraction de bord vertical est effectuée en calculant des différences entre un pixel et des pixels adjacents des deux côtés dans la direction de la colonne.
